# EUROPEAN PATENT APPLICATION

(11) **EP 4 510 709 A1**
(43) Date of publication of application: **19.02.2025**
(21) Application number: 23814722.7
(22) Date of filing: 21.03.2023
(51) Int. Cl.: H04W 48/16

(54) **COCKPIT UNIT CONTROL METHOD AND SYSTEM, AND COMPUTER STORAGE MEDIUM**

(30) Priority: 02.06.2022 CN 202210620482
(71) Applicant: ZTE Corporation, Shenzhen, Guangdong 518057 (CN)
(72) Inventor: CHEN, Jianjiang, Shenzhen, Guangdong 518057 (CN)
(74) Representative: Savi, Massimiliano
(86) International application number: PCT/CN2023/082852
(87) International publication number: WO 2023/231525

(57) **Abstract**

Disclosed in the present application are a cockpit unit control method and system, and a computer storage medium. The cockpit unit control method comprises: acquiring first image data, and generating a target wireless network according to the first image data; confirming a target cockpit unit, which corresponds to the first image data, and controlling the target cockpit unit to activate on the basis of the target wireless network; receiving a network access request, which is sent by a client, wherein the network access request carries second feature data; and when it is determined that the degree of feature association between the second feature data and first feature data, which corresponds to the target wireless network, is smaller than a preset threshold value, sending a network access response to the client, such that the client is connected to the target cockpit unit by means of the target wireless network.

## Description

### CROSS-REFERENCE TO RELATED APPLICATION

This application is filed on the basis of Chinese patent application No. 202210620482.5 filed June 2, 2022, and claims priority to the Chinese patent application, the entire contents of which are incorporated herein by reference.

### TECHNICAL FIELD

The present disclosure relates to the technical field of vehicle-mounted device control, and more particularly, to a cockpit unit control method and system, and a computer storage medium.

### BACKGROUND

In recent years, the automotive industry has entered the era of intelligence and electrification, with the development of smart cockpits becoming a dominant trend. Compared to traditional cockpits, smart cockpits can interact with mobile devices used by users, thereby achieving human-vehicle interaction and offering services such as intelligent display, intelligent voice, and intelligent driving.

However, when multiple users in the smart cockpit need to connect their mobile devices to the cockpit system for interaction, the process involves complicated operations. Current systems do not support intelligent and convenient automatic connection, switching, or control. For example, when the position of a user in the smart cockpit changes, the user needs to manually operate the mobile device to perform operations such as network search, network selection, network tapping, etc., to select a wireless network of the cockpit unit where the user is currently in, and manually enter a password to connect to the network of the cockpit unit. This process complicates the connection and switching between cockpit units, negatively impacting the user experience.

### SUMMARY

Embodiments of the present disclosure provide a cockpit unit control method and system, and a computer storage medium.

In accordance with a first aspect of the present disclosure, an embodiment provides a cockpit unit control method, applied to a cockpit, the method including: acquiring first image data and generating a target wireless network according to the first image data, the target wireless network includes network connection data, and the network connection data includes first feature data generated according to the first image data; determining a target cockpit unit corresponding to the first image data, and controlling the target cockpit unit to start based on the target wireless network; receiving a network access request sent by a client, the network access request carries second feature data; and sending a network access response to the client in response to determining that a degree of feature association between the second feature data and the first feature data is less than a preset threshold, for the client to connect to the target cockpit unit through the target wireless network.

In accordance with a second aspect of the present disclosure, an embodiment provides a cockpit unit control method, applied to a client, the method including: reading a network user name of at least one wireless network; extracting first feature data of the network user name; determining the wireless network corresponding to the network user name having a degree of feature association less than an association threshold as a target wireless network, the degree of feature association is a degree of association between the first feature data and second feature data which is preset; generating a network access request according to the second feature data and the first feature data; and sending the network access request to a target cockpit unit corresponding to the target wireless network to control the target cockpit unit through the target wireless network.

In accordance with a third aspect of the present disclosure, an embodiment provides a cockpit unit control system, including a memory, a processor, and a computer program stored in the memory and executable by the processor, the computer program, when executed by the processor, causes the processor to implement the cockpit unit control method in accordance with any embodiment of the first aspect and the second aspect.

In accordance with a fourth aspect of the present disclosure, an embodiment provides a computer-readable storage medium, storing computer-executable instructions which, when executed by a processor, cause the processor to implement the cockpit unit control method in accordance with any embodiment of the first aspect and the second aspect.

### BRIEF DESCRIPTION OF DRAWINGS

FIG. 1 is a flowchart of a cockpit unit control method according to an embodiment of the present disclosure;
FIG. 2 is a flowchart of generating a target wireless network in a cockpit unit control method according to another embodiment of the present disclosure;
FIG. 3 is a flowchart of sending a network access response to the client according to another embodiment of the present disclosure;
FIG. 4 is a flowchart of determining the target cockpit unit from a plurality of cockpit units in a cockpit unit control method according to another embodiment of the present disclosure;
FIG. 5 is another flowchart of determining the target cockpit unit from a plurality of cockpit units in a cockpit unit control method according to another embodiment of the present disclosure;
FIG. 6 is a flowchart of additional steps in a cockpit unit control method according to another embodiment of the present disclosure;
FIG. 7 is a flowchart of a cockpit unit control method applied to a client according to another embodiment of the present disclosure;
FIG. 8 is a flowchart of determining the wireless network corresponding to the network user name having a degree of feature association less than an association threshold as a target wireless network according to another embodiment of the present disclosure;
FIG. 9 is a flowchart of a cockpit unit control method applied to a smart cockpit according to another embodiment of the present disclosure;
FIG. 10 is an example diagram of a cockpit unit control method applied to a target cockpit unit according to another embodiment of the present disclosure;
FIG. 11 is an example diagram of a cockpit unit control method applied to a client according to another embodiment of the present disclosure; and
FIG. 12 is a structural diagram of a cockpit unit control system according to another embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

In some embodiments, although functional modules have been divided in the schematic diagrams of systems and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

The present disclosure discloses a cockpit unit control method and system, and a computer storage medium. The cockpit unit control method of the present disclosure includes: acquiring first image data and generating a target wireless network according to the first image data, where the target wireless network includes network connection data, and the network connection data includes first feature data generated according to the first image data; determining a target cockpit unit corresponding to the first image data, and controlling the target cockpit unit to start based on the target wireless network; receiving a network access request sent by a client, where the network access request carries second feature data; and sending a network access response to the client in response to determining that a degree of feature association between the second feature data and the first feature data is less than a preset threshold, for the client to connect to the target cockpit unit through the target wireless network. The first image data of the user is acquired, and the target wireless network is automatically generated in the target cockpit unit according to the first image data, such that the client of the user automatically connects to the target wireless network. After the cockpit unit in which the user is located in changes, the mobile terminal equipped with the client can automatically connect to the target wireless network and control the target cockpit unit through the target wireless network. Therefore, the user's operation is simplified, and the user does not need to manually switch the network, thus providing the user with a more intelligent interactive experience.

The embodiments of the present disclosure will be further described in detail below in conjunction with the accompanying drawings.

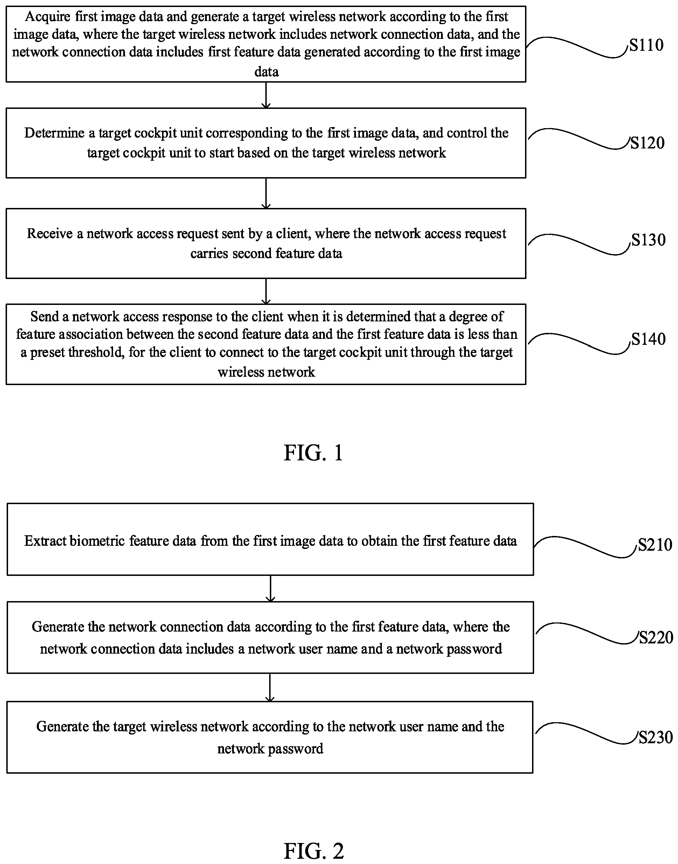

Referring to FIG. 1, an embodiment of the present disclosure provides a cockpit unit control method, applied to a target cockpit unit. The cockpit unit control method includes, but not limited to, the following steps S110, S120, S130, and S140.

At S 110, first image data is acquired and a target wireless network is generated according to the first image data, where the target wireless network includes network connection data, and the network connection data includes first feature data generated according to the first image data.

In an implementation, a smart cockpit transforms the entire vehicle system into a digital platform. A conventional automobile cockpit can only be used to indicate various driving working conditions, and the key feature of the smart cockpit is intelligence. The smart cockpit includes a plurality of sensor devices, and is also equipped with a plurality of controllable terminal devices and Artificial Intelligent (Al) devices, which can provide the user with a more comfortable driving experience based on the habit and comfort of the user. The smart cockpit includes a plurality of cockpit units. The cockpit unit corresponds to the position of the user in the smart cockpit. The cockpit unit is an integrated unit, which is equipped with independent sensors and includes an audio and video player, environment control components such as those for controlling lighting and air conditioning, and a seat position adjustment component. After the user connects to a network generated by the cockpit unit through a portable terminal (e.g., a mobile phone, a tablet computer, etc.), the user can control functional components in the cockpit unit through a corresponding client on the portable terminal, thereby satisfying the user's needs.

In an implementation, when a user A sits in a seat #1 in the smart cockpit, there is a cockpit unit #1 corresponding to the seat #1. When the user A unlocks a portable terminal and opens a smart cockpit application in the portable terminal, the user A needs to manually query and select a corresponding wireless network #1 through the portable terminal and connect to the cockpit unit #1. When the user A changes his or her position in the smart cockpit and moves to a seat #2 in the smart cockpit and the user A is still using the smart cockpit application in the portable terminal, the user A needs to manually query and select a corresponding wireless network #2 and connect to a cockpit unit #2 corresponding to the seat #2. The process is complicated and affects user experience. Therefore, in the present disclosure, it is proposed to realize the automatic connection between the portable terminal of the user and the cockpit unit in front of the user's seat by acquiring the first image data representing the user, thereby simplifying the user's operation and improving user experience.

In some embodiments, when the user enters the smart cockpit, a master controller of the smart cockpit starts a camera to perform face recognition on each user, marks each user, acquires first image data having user face information, and sends the first image data to a cockpit unit, for the cockpit unit to automatically generate a plurality of sets of digits related to each face according to face recognition data of the users, according to the first image data, and generate a target wireless network.

At S120, a target cockpit unit corresponding to the first image data is determined, and the target cockpit unit is controlled to start based on the target wireless network.

In an implementation, the target wireless network is generated using the target cockpit unit as a network hotspot, and the target wireless network includes the network connection data. The client can determine the target wireless network corresponding to the target cockpit unit among a plurality of wireless networks in the smart cockpit according to the network connection data when searching for networks nearby, and then send a network access request to the target cockpit unit. As such, the client can control the target cockpit unit through the target wireless network.

In some embodiments, the first image data is face image data of the user, and the first feature data is specific feature data obtained by the target cockpit unit by performing feature extraction processing on the face image data representing the user's personal identity through a built-in component with face recognition function. For example, the target cockpit unit defines a length reference unit through the built-in component with face recognition function, and acquires a pupil distance of the user, which is defined as eye-length. For example, the distance between the pupil centers of the eyes is 160 pixels. The length reference unit is defined as std-length, where std-length = eye-length/n, n being a coefficient by which eye-length is divided. For example, n = 20 (or other values). std-length = 8 pixels. Important feature positions on the face are measured using the length reference unit std-length. The width between the user's ears is measured to be 240 pixels, which equals to 30 times the length reference unit. Therefore, binaural feature data is 30. Similarly, the distance between a center point of the eyes and a center point of the mouth may be obtained, which is, for example, 21 times the length reference unit, and the width of the mouth may be obtained, which is 12 times the length reference unit. Then, the data is combined according to a rule to obtain first feature data "302112", which is associated with face features of the user. The first feature data may be used for association degree analysis in subsequent processes. As such, the terminal device carried by the user can be automatically connected to the cockpit unit, thereby simplifying the user's operation.

At S130, a network access request sent by a client is received, where the network access request carries second feature data.

In an implementation, the network access request includes configuration information generated by the client according to the target wireless network and second feature data. The configuration information is used for network interaction with the target cockpit unit corresponding to the target wireless network, to transmit the second feature data to the target cockpit unit, for the target cockpit unit to perform subsequent processing according to the second feature data. The second feature data is used for the target cockpit unit to determine whether the user corresponding to the terminal device that sends the second feature data is currently in the target cockpit unit. When it is determined that the user corresponding to the terminal device that sends the second feature data is currently in the target cockpit unit, the user is automatically connected to the network, thereby improving user experience.

In some embodiments, the second feature data is generated by the client according to user image information acquired in advance. The second feature data represents personal feature data of the user corresponding to the client and represents personal information of the user. When the target cockpit unit determines that the second feature data is associated with the first feature data, the terminal device carried by the user is automatically connected to the target wireless network. As such, manual operations of the user are avoided, and the user's operation is simplified.

At S 140, a network access response is sent to the client when it is determined that a degree of feature association between the second feature data and the first feature data is less than a preset threshold, for the client to connect to the target cockpit unit through the target wireless network.

In an implementation, data analysis on the second feature data and the first feature data is performed in the target cockpit unit. Face data of a user obtained in the smart cockpit is the first feature data, and data obtained in a portable terminal of the user is the second feature data. It is determined through comparison and analysis whether the second feature data and the first feature data whether the two groups of data are closely associated to each other, i.e., are from the same user's face. After determining that the second feature data and the first feature data are from the same user's face, a hotspot of the smart cockpit allows access of the device, and sends a network access response to the client, for the client to control the target cockpit unit through the target wireless network to automatically enable a hotspot in front of the corresponding person on the seat and enable the portable terminal of the user to automatically connect to the hotspot of the corresponding to the user in the smart cockpit.

In some embodiments, when the user enters the smart cockpit, the master controller of the smart cockpit starts the camera to perform face recognition on each user, and marks each user. A plurality of sets of digits related to each face are automatically generated using an algorithm according to face recognition data of the users. For example, digits generated by face recognition on the user A in the smart cockpit is defined as A-CD, a mobile phone of the user has a smart cockpit application installed therein, and the smart cockpit application also automatically generates a set of digits related to his or her face according to the same algorithm as that in the smart cockpit. The digits generated by face recognition in the mobile phone of the user A are defined as A-MD. It is clear that because the digits generated in the smart cockpit and the digits generated in the mobile phone are of the same person, there is an association between A-CD and A-MD. In addition, because the face recognition data has been acquired in the smart cockpit, the master controller of the smart cockpit acquires a specific position of the user in the smart cockpit and a corresponding target cockpit unit, to realize the automatic connection between the portable terminal of the user and the cockpit unit corresponding to the user's seat.

In some embodiments, in a scenario in which a user moves from a first cockpit unit to a second cockpit unit in the smart cockpit, the cockpit unit control method includes: acquiring, by the master controller of the smart cockpit, second image data; when the second image data is inconsistent with the first image data, changing, by the master controller, the first image data to the second image data and disabling a target wireless network corresponding to the first cockpit unit; acquiring first image data and generating a second wireless network according to the first image data, where the second wireless network includes network connection data, and the network connection data includes first feature data generated according to the first image data; receiving a network access request sent by a client, where the network access request carries second feature data; and sending a network access response to the client when a degree of feature association between the second feature data and the first feature data is less than an association threshold, for the client to control the second cockpit unit through the second wireless network. In this way, the problem that a user who changes the position and intends to switch a cockpit unit to which his or her portable terminal is connected needs to manually change a network connection configuration of the portable device when portable terminals of a plurality of users are connected to a plurality of cockpit units in the smart cockpit is overcome, a password related to face recognition for the user is automatically generated, a hotspot in front of the corresponding user on the seat is automatically enabled, and a client used by the user can control the target cockpit unit through the target wireless network, thereby providing the user with an intelligent interactive experience.

Referring to FIG. 2, an embodiment of the present disclosure provides a cockpit unit control method applied to a target cockpit unit. The cockpit unit control method includes, but not limited to, the following steps S210, S220, and S230.

At S210, biometric feature data is extracted from the first image data to obtain the first feature data.

At S220, the network connection data is generated according to the first feature data, where the network connection data includes a network user name and a network password.

At S230, the target wireless network is generated according to the network user name and the network password.

In an implementation, the biometric feature data in the first image data is face image data, and a face recognition component in the target cockpit unit performs image recognition processing on the acquired face image data, analyzes data obtained through the image recognition, acquires a plurality of feature parameters representing specific facial features of the user, and further combines data of the plurality of feature parameters to obtain first feature data representing the personal identity of the user. For example, a length reference unit is defined. For example, a pupil distance of the user is acquired, which is defined as eye-length. For example, the distance between pupil centers of both eyes is 160 pixels. The length reference unit is defined as std-length, where std-length = eye-length/n, n being a coefficient by which eye-length is divided. For example, n = 20 (or other values). std-length = 8 pixels. Important feature positions on the face are measured using the length reference unit std-length. The width between the user's ears is measured to be 240 pixels, which equals to 30 times the length reference unit. Therefore, binaural feature data is 30. Similarly, the distance between a center point of the eyes and a center point of the mouth may be obtained, which are, for example, 21 times the length reference unit, and the width of the mouth may be obtained, which is 12 times the length reference unit. The data is combined according to a rule to obtain data "302112", which is associated with face features of the user.

In some embodiments, in the above example, for ease of understanding, length is used as the standard unit (i.e., the reference unit). In practical applications, those having ordinary skills in the art can select the standard unit according to an application scenario, or obtain the first feature data according to the face image data by using a specific face recognition algorithm, which is not limited in the present disclosure.

In some embodiments, the specific recognition algorithm for obtaining the first feature data according to the face image data includes, but not limited to, at least one of a recognition algorithm based on face feature points, a recognition algorithm based on an entire face image, a recognition algorithm based on a template, a recognition algorithm based on a neural network, and a recognition algorithm based on a support vector machine.

In some embodiments, the biometric feature data in the first image information may be face image data, iris, or other image recognition data. Those having ordinary skills in the art can select specific image recognition data as the first image information according to an actual situation, which is not limited in the present disclosure.

In some embodiments, the target cockpit unit generates the network connection data according to the first feature data, where the network connection data includes a network user name and a network password, and generates the target wireless network according to the network user name and the network password. When the client sends a network access request, the client determines the target wireless network according to the network user name, and then determines the corresponding target cockpit unit. When the target cockpit unit receives the network access request, the target cockpit unit performs association degree analysis on feature information carried in the network access request and the network password. When the cockpit unit detects that the feature information requesting access hotspot is associated with the network password, the target cockpit unit allows access. Otherwise, the target cockpit unit rejects access. In this way, the automatic connection between the portable terminal of the user and the cockpit unit in front of the user's seat is realized.

In some embodiments, the network user name includes first feature data, and the network password is the first feature data. For example, before the step of generating the network connection data according to the first feature data is performed, the first feature data "312011" has been obtained, the target cockpit unit performs data application, associates the face data of the user with a user name and a password of a smart cockpit hotspot, determines a smart cockpit in which the user is located, adjusts and sets the user name of the hotspot corresponding to the smart cockpit to "user302112", and sets the password corresponding to the smart cockpit to "302112", such that the client can acquire the network password of the target wireless network by acquiring the user name of the target network, and then sends a network access request carrying the network password. After the network access request is sent to the target cockpit unit, the target cockpit unit directly acquires the network password, allows the device corresponding to the client to access, automatically generates the password related to face recognition for the user, and automatically enables the hotspot in front of the corresponding user on the seat for automatic connection.

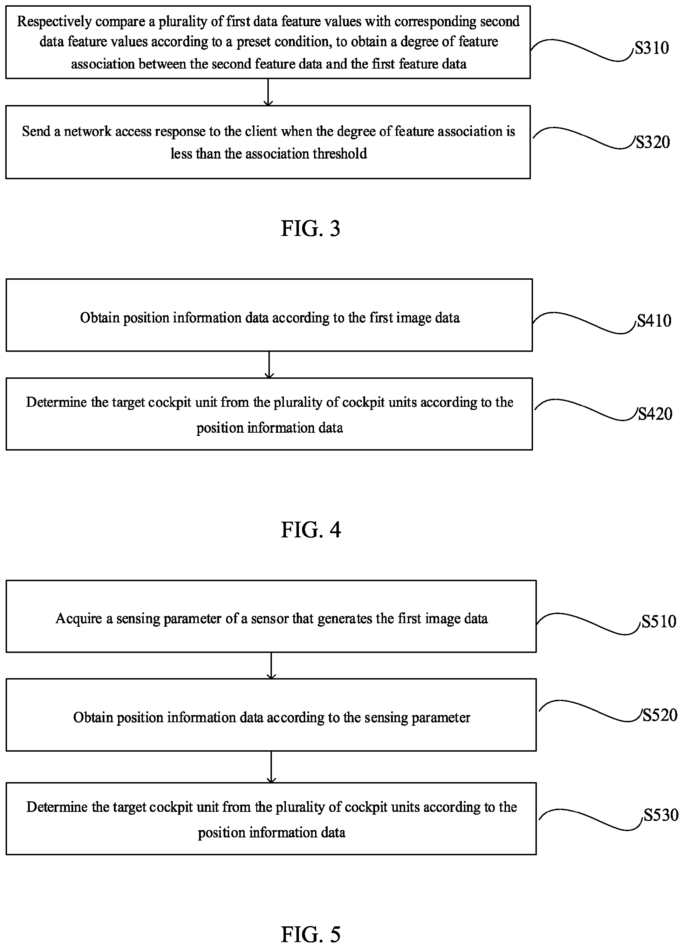

Referring to FIG. 3, an embodiment of the present disclosure provides a cockpit unit control method applied to a target cockpit unit. The cockpit unit control method includes, but not limited to, the following steps S310 and S330.

At S310, a plurality of first data feature values are respectively compared with corresponding second data feature values according to a preset condition, to obtain a degree of feature association between the second feature data and the first feature data.

At S320, a network access response is sent to the client when the degree of feature association is less than the association threshold.

In some embodiments, the first feature data includes a plurality of first data feature values generated according to a preset condition, the second feature data includes a plurality of second data feature values generated according to the preset condition, and sending a network access response to the client when it is determined that a degree of feature association between the second feature data and the first feature data is less than an association threshold which is preset includes: respectively comparing the plurality of first data feature values with the corresponding second data feature values according to the preset condition, to obtain the degree of feature association between the second feature data and the first feature data; and sending a network access response to the client when the degree of feature association is less than the association threshold.

In an implementation, the first feature data includes a plurality of first data feature values arranged according to a preset condition, and the second feature data includes a plurality of second data feature values arranged according to the preset condition. For example, face data of a user obtained by the cockpit unit in the smart cockpit is "302112", and data obtained by the mobile phone of the user is "312011". Through comparison of every two bits in the face data obtained by the cockpit unit with corresponding two bits in the data obtained by the mobile phone, for example, "30" with "31", 21 with "20", and "12" with "11", a plurality of feature differences are obtained. The feature differences are all less than a preset association threshold of "3", so it is determined that the two sets of data are closely associated with each other and are from the same user's face.

In some embodiments, in practical applications, those having ordinary skills in the field may select the correlation threshold, the preset condition, and the number of bits in the data that are compared according to an application scenario, or may select a method for determining whether the two sets of face recognition data are associated with each other according to a specific face recognition algorithm, which is not limited in the present disclosure.

In some embodiments, a method for acquiring the degree of feature association between the second feature data and the first feature data includes: obtaining a plurality of data feature values and a feature value order according to the second feature data; segmenting a target network password generated according to the first feature data into a plurality of feature fields according to the feature value order; and comparing the data feature values and the feature fields to obtain the degree of feature association.

Referring to FIG. 4, an embodiment of the present disclosure provides a cockpit unit control method applied to a smart cockpit. The smart cockpit includes a plurality of cockpit units and a master controller. The cockpit units each include a sub-controller. The cockpit unit control method includes, but not limited to, the following steps S410 and S420.

At S410, position information data is obtained according to the first image data.

At S420, the target cockpit unit is determined from the plurality of cockpit units according to the position information data.

In an implementation, a main camera in the smart cockpit acquires face recognition data of the entire smart cockpit, and the master controller determines position information representing a specific cockpit unit in which the user is located in the face recognition data through a built-in image recognition component, determines a target cockpit unit from the plurality of cockpit units according to the position information data, and performs subsequent operations.

Referring to FIG. 5, an embodiment of the present disclosure provides a cockpit unit control method applied to a smart cockpit. The smart cockpit includes a plurality of cockpit units and a master controller. The cockpit units each include a sub-controller. The cockpit unit control method includes, but not limited to, the following steps S510, S520, and S530.

At S510, a sensing parameter of a sensor that generates the first image data is acquired.

At S520, position information data is obtained according to the sensing parameter.

At S530, the target cockpit unit is determined from the plurality of cockpit units according to the position information data.

In an implementation, face recognition data of each cockpit unit is acquired by a sensor arranged in the cockpit unit, and the master controller acquires sensing parameters of the sensors that generate the face recognition data, obtains position information data according to the sensing parameters, determines the target cockpit unit from the plurality of cockpit units according to the position information data, and performs subsequent operations.

In some embodiments, the first image data includes face image data, and generating a target wireless network according to the first image data includes: obtaining, by the sub-controller of the target cockpit unit, first feature data according to the face image data, and generating the target wireless network according to the first feature data.

In some embodiments, generating the target wireless network according to the first feature data by the sub-controller includes: generating, by the sub-controller, network connection data according to the first feature data, where the network connection data includes a network user name and a network password; and generating, by the sub-controller, the target wireless network according to the network user name and the network password.

In some embodiments, the network user name includes first feature data, and the network password is the first feature data.

In some embodiments, the first feature data includes a plurality of first data feature values generated according to a preset condition, the second feature data includes a plurality of second data feature values generated according to the preset condition, and sending a network access response to the client when it is determined that a degree of feature association between the second feature data and the first feature data is less than an association threshold which is preset includes: respectively comparing, by the sub-controller, the plurality of first data feature values with the corresponding second data feature values according to the preset condition, to obtain the degree of feature association between the second feature data and the first feature data; and sending, by the sub-controller, the network access response to the client when the degree of feature association is less than the association threshold.

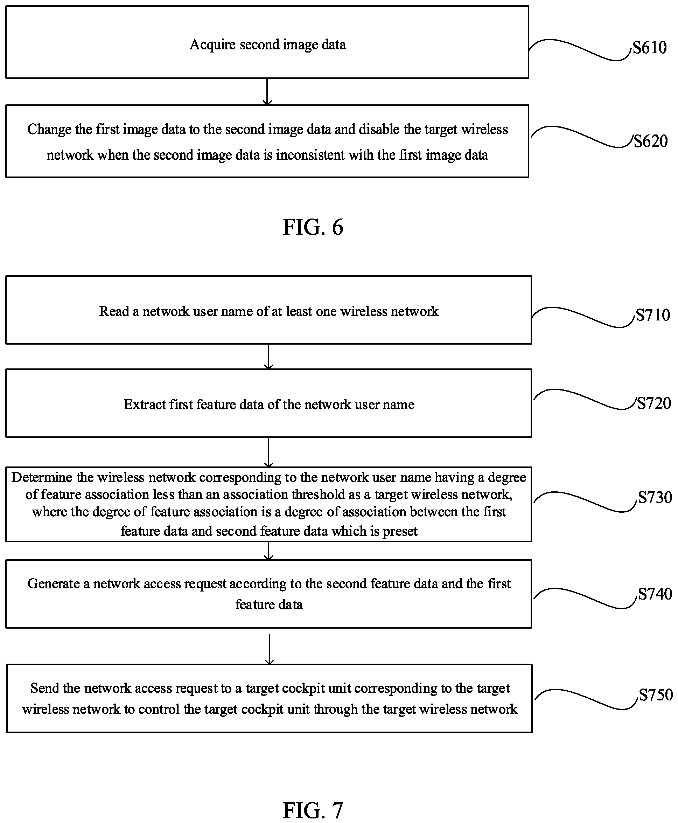

Referring to FIG. 6, an embodiment of the present disclosure provides a cockpit unit control method applied to a smart cockpit. The cockpit unit control method includes, but not limited to, the following steps S610 and S620.

At S610, second image data is acquired.

At S620, the first image data is changed to the second image data and the target wireless network is disabled when the second image data is inconsistent with the first image data.

In an implementation, when the second image data is inconsistent with the first image data, i.e., in a scenario in which a user moves from a first cockpit unit to a second cockpit unit in the smart cockpit, the cockpit unit control method includes: acquiring, by the master controller of the smart cockpit, second image data; when the second image data is inconsistent with the first image data, changing, by the master controller, the first image data to the second image data and disabling a target wireless network corresponding the first cockpit unit; acquiring first image data and generating a second wireless network according to the first image data, where the second wireless network includes network connection data, and the network connection data includes first feature data generated according to the first image data; receiving a network access request sent by a client, where the network access request carries second feature data; and sending a network access response to the client when a degree of feature association between the second feature data and the first feature data is less than an association threshold, for the client to connect to the second cockpit unit through the second wireless network. In this way, the problem that a user who changes the position and intends to switch a cockpit unit to which his or her portable terminal is connected needs to manually change a network connection configuration of the portable device when portable terminals of a plurality of users are connected to a plurality of cockpit units is overcome, a password related to face recognition for the user is automatically generated, a hotspot in front of the corresponding person on the seat is automatically enabled, and a client used by the user can control the target cockpit unit through the target wireless network. As such, the automatic connection of the portable terminal of the user when the user switches the cockpit unit can be realized.

Referring to FIG. 7, an embodiment of the present disclosure provides a cockpit unit control method applied to a client. The cockpit unit control method includes, but not limited to, the following steps S710, S720, S730, S740, and S750.

At S710, a network user name of at least one wireless network is read.

At S720, first feature data of the network user name is extracted.

At S730, the wireless network corresponding to the network user name having a degree of feature association less than an association threshold is determined as a target wireless network, where the degree of feature association is a degree of association between the first feature data and second feature data which is preset.

At S740, a network access request is generated according to the second feature data and the first feature data.

At S750, the network access request is sent to a target cockpit unit corresponding to the target wireless network to control the target cockpit unit through the target wireless network.

In an implementation, the above operations S710 to S750 show the application of the method of the present application to the client, and the client acquires a wireless network user name, determines a target wireless network according to the wireless network user name, and then sends a network access request and automatically inputs a network password to perform network access, thereby achieving automatic connection. For example, data "312011" is known in the mobile phone of the user. The mobile phone performs a search to obtain a user name "user302112" of a hotspot, and parses the user name. When finding that a data feature of the user name is closely associated with the data "312011" in the mobile phone, the mobile phone of the user automatically initiates an access request to the associated user name, and automatically inputs a password. The hotspot in the smart cockpit detects that there is a device requesting access, and checks the user and the password. When determining that the device is associated with the known data "302112", the hotspot in the smart cockpit allows the device to access.

In some embodiments, the client acquires a plurality of network user names; determines a wireless network corresponding to the network user name having a degree of feature association less than the association threshold as a target wireless network, where the degree of feature association is a degree of association between a feature value in the network user name and the preset second feature data; generates a network access request according to the second feature data and the first feature data, where the first feature data is a feature value in the network user name of the target wireless network; and sends the network access request to the target cockpit unit corresponding to the target wireless network, so as to control the target cockpit unit through the target wireless network. In this way, the client can automatically generate the password related to face recognition for the user and automatically enable the hotspot in front of the corresponding user on the seat, thereby achieving automatic connection.

In some embodiments, the network user name of the target wireless network generated by the target cockpit unit includes first feature data, and the network password of the target wireless network is the first feature data. After determining the target wireless network, the client may acquire the network password according to the network user name, and sends a network access request carrying the password information to the target cockpit unit. After receiving the network access request, the target cockpit unit sends a network access response to the client according to the password information carried in the network access request. After receiving the network access response, the client determines that it has accessed the target wireless network, and automatically connects the user to the target cockpit unit, such that the user can control the target cockpit unit through the client through the target wireless network.

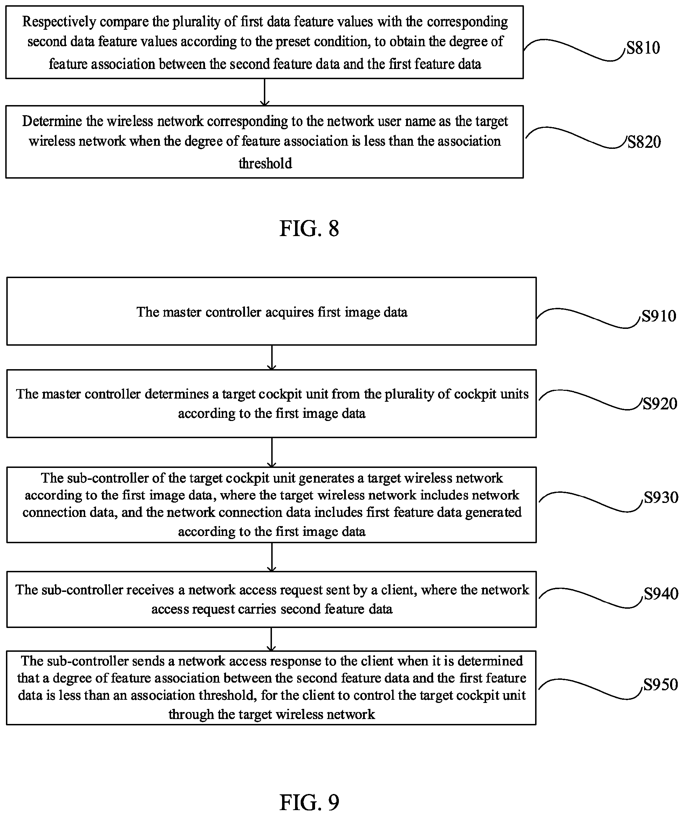

Referring to FIG. 8, an embodiment of the present disclosure provides a cockpit unit control method applied to a client. The cockpit unit control method includes, but not limited to, the following steps S810 and S820.

At S810, the plurality of first data feature values are respectively compared with the corresponding second data feature values according to the preset condition, to obtain the degree of feature association between the second feature data and the first feature data.

At S820, the wireless network corresponding to the network user name is determined as the target wireless network when the degree of feature association is less than the association threshold.

In some embodiments, the first feature data includes a plurality of first data feature values generated according to a preset condition, the second feature data includes a plurality of second data feature values generated according to the preset condition, and determining the wireless network corresponding to the network user name having a degree of feature association less than an association threshold as a target wireless network includes: respectively comparing the plurality of first data feature values with the corresponding second data feature values according to the preset condition, to obtain the degree of feature association between the second feature data and the first feature data; and determining the wireless network corresponding to the network user name as the target wireless network when the degree of feature association is less than the association threshold. In this way, a password related to face recognition for the user is automatically generated, a hotspot in front of the corresponding user on the seat is automatically enabled, and a client used by the user can control the target cockpit unit through the target wireless network, thereby providing the user with an intelligent interactive experience.

Referring to FIG. 9, an embodiment of the present disclosure provides a cockpit unit control method applied to a smart cockpit. The smart cockpit includes a plurality of cockpit units and a master controller. The cockpit units each include a sub-controller. The master controller has permission to control the sub-controllers, including, but not limited to, controlling all the sub-controllers to display or play the same content or perform the same operation, and controlling each of the sub-controllers to independently receive or display the corresponding content or perform a corresponding operation. For example, in the process of determining the target cockpit unit, the master controller may determine one cockpit unit or may determine to connect to a plurality of cockpit units, e.g., a plurality of cockpit units in the back row. The cockpit unit control method includes, but not limited to, the following steps S910, S920, S930, S940, and S950.

At S910, the master controller acquires first image data.

At S920, the master controller determines a target cockpit unit from the plurality of cockpit units according to the first image data.

At S930, the sub-controller of the target cockpit unit generates a target wireless network according to the first image data, where the target wireless network includes network connection data, and the network connection data includes first feature data generated according to the first image data.

At S940, the sub-controller receives a network access request sent by a client, where the network access request carries second feature data.

At S950, the sub-controller sends a network access response to the client when it is determined that a degree of feature association between the second feature data and the first feature data is less than an association threshold, for the client to control the target cockpit unit through the target wireless network.

In an implementation, the smart cockpit includes a plurality of cockpit units and a master controller, the cockpit units each include a sub-controller, the master controller is responsible for selecting a target cockpit unit in the smart cockpit, the sub-controller is responsible for performing specific network connection processing in the target cockpit unit. The master controller acquires first image data, and determines a target cockpit unit from the plurality of cockpit units according to the first image data. The sub-controller generates a target wireless network according to the first image data, where the target wireless network includes network connection data, and the network connection data includes first feature data generated according to the first image data. The sub-controller receives a network access request sent by a client, where the network access request carries second feature data. The sub-controller sends a network access response to the client when it is determined that a degree of feature association between the second feature data and the first feature data is less than an association threshold, for the client to control the target cockpit unit through the target wireless network. In this way, in the smart cockpit environment, the terminal device carried by the user can automatically connect to the cockpit unit corresponding to the user's seat, which provides great convenience for the user to use.

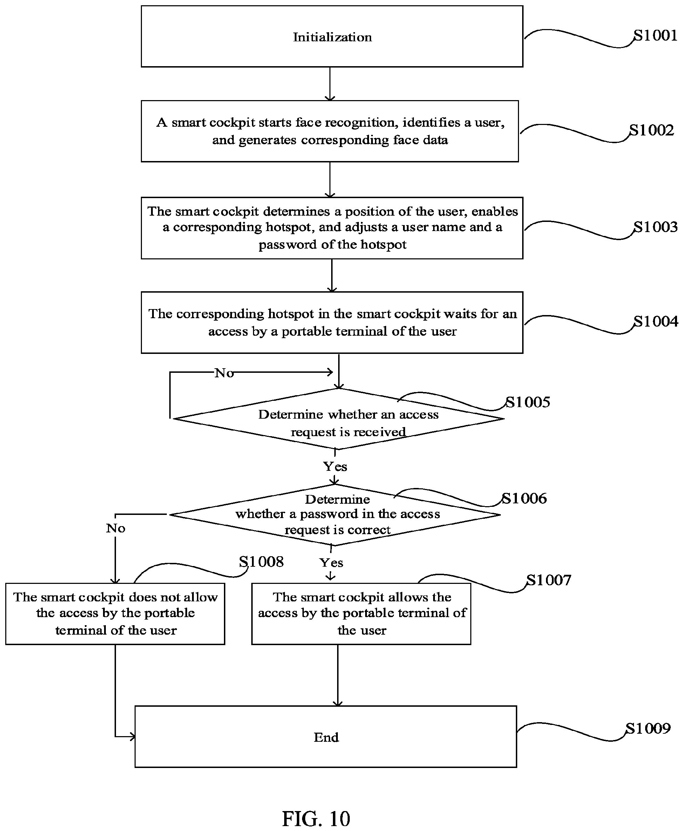

Referring to FIG. 10, an embodiment of the present disclosure provides a cockpit unit control method applied to a target cockpit unit. The cockpit unit control method includes, but not limited to, the following steps S1001 to S1009.

At 51001, initialization is performed.

At S 1002, a smart cockpit starts face recognition, identifies a user, and generates corresponding face data.

At S1003, the smart cockpit determines a position of the user, enables a corresponding hotspot, and adjusts a user name and a password of the hotspot.

At S1004, the corresponding hotspot in the smart cockpit waits for an access by a portable terminal of the user.

At S1005, it is determined whether an access request is received. If yes, S1006 is performed; otherwise, S1005 is performed.

At S1006, it is determined whether a password in the access request is correct. If yes, S1007 is performed; otherwise, S1008 is performed.

At S1007, the smart cockpit allows the access by the portable terminal of the user.

At S1008, the smart cockpit does not allow the access by the portable terminal of the user.

At S1009, the process ends.

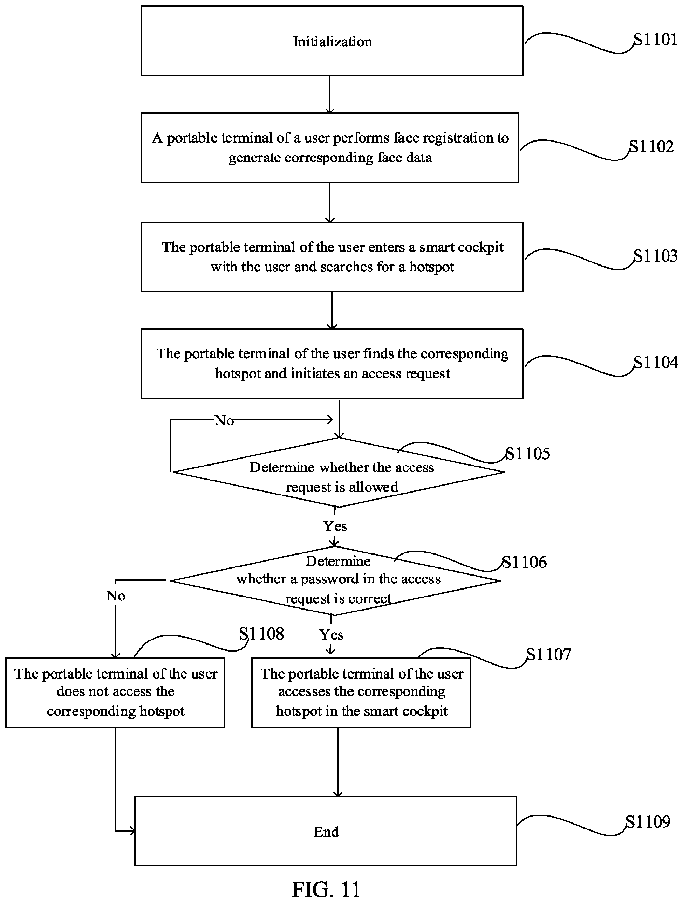

Referring to FIG. 11, an embodiment of the present disclosure provides a cockpit unit control method applied to a client. The cockpit unit control method includes, but not limited to, the following steps S1101 to S1109.

At 51101, initialization is performed.

At S1102, a portable terminal of a user performs face registration to generate corresponding face data.

At S1103, the portable terminal of the user enters a smart cockpit with the user and searches for a hotspot.

At S1104, the portable terminal of the user finds the corresponding hotspot and initiates an access request.

At S1105, it is determined whether the access request is allowed. If yes, S1106 is performed; otherwise, S1105 is performed.

At S1106, it is determined whether a password in the access request is correct. If yes, S1107 is performed; otherwise, S1108 is performed.

At S1107, the portable terminal of the user accesses the corresponding hotspot in the smart cockpit.

At S1108, the portable terminal of the user does not access the corresponding hotspot.

At S1109, the process ends.

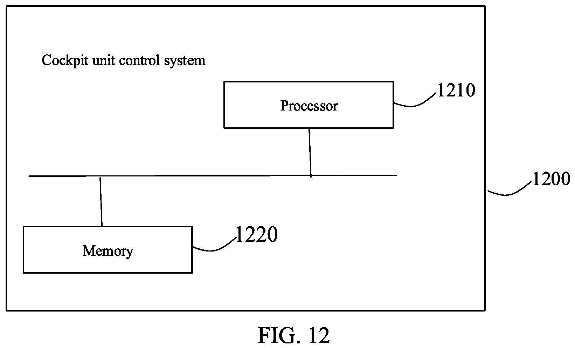

Referring to FIG. 12, an embodiment of the present disclosure provides a cockpit unit control system 1200, including: a memory 1220, a processor 1210, and a computer program stored in the memory and executable by the processor. The computer program, when executed by the processor 1210, causes the processor 1210 to implement the cockpit unit control method in any one of the above embodiments, for example, implement the method steps S110 to S140 in FIG. 1, the method steps S210 to S230 in FIG. 2, the method steps S310 to S320 in FIG. 3, the method steps S410 to S420 in FIG. 4, the method steps S510 to S530 in FIG. 5, the method steps S610 to S620 in FIG. 6, the method steps S710 to S750 in FIG. 7, the method steps S810 to S820 in FIG. 8, the method steps S910 to S950 in FIG. 9, the method steps S1001 to S1009 in FIG. 10, or the method steps S1101 to S1109 in FIG. 11.

In addition, an embodiment of the present disclosure provides a computer-readable storage medium, storing computer-executable instructions which, when executed by one or more control processors, cause the one or more control processors to, for example, implement the method steps S110 to S140 in FIG. 1, the method steps S210 to S230 in FIG. 2, the method steps S310 to S320 in FIG. 3, the method steps S410 to S420 in FIG. 4, the method steps S510 to S530 in FIG. 5, the method steps S610 to S620 in FIG. 6, the method steps S710 to S750 in FIG. 7, the method steps S810 to S820 in FIG. 8, the method steps S910 to S950 in FIG. 9, the method steps S1001 to S1009 in FIG. 10, or the method steps S1101 to S1109 in FIG. 11.

The present disclosure have the following beneficial effects: by using the cockpit unit control method of the present disclosure, which includes: acquiring first image data and generating a target wireless network according to the first image data, where the target wireless network includes network connection data, and the network connection data includes first feature data generated according to the first image data; determining a target cockpit unit corresponding to the first image data, and controlling the target cockpit unit to start based on the target wireless network; receiving a network access request sent by a client, where the network access request carries second feature data; and sending a network access response to the client when it is determined that a degree of feature association between the second feature data and the first feature data is less than a preset threshold, for the client to connect to the target cockpit unit through the target wireless network, the first image data of the user is acquired, and the target wireless network is automatically generated in the target cockpit unit according to the first image data, such that the client of the user automatically connects to the target wireless network. After the cockpit unit in which the user is located in changes, the mobile terminal equipped with the client can automatically connect to the target wireless network and control the target cockpit unit through the target wireless network. Therefore, the user's operation is simplified, and the user does not need to manually switch the network, thus providing the user with a more intelligent interactive experience.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A cockpit unit control method, applied to a cockpit, the method comprising:
acquiring first image data and generating a target wireless network according to the first image data, wherein the target wireless network comprises network connection data, and the network connection data comprises first feature data generated according to the first image data;
determining a target cockpit unit corresponding to the first image data, and controlling the target cockpit unit to start based on the target wireless network;
receiving a network access request sent by a client, wherein the network access request carries second feature data; and
sending a network access response to the client in response to determining that a degree of feature association between the second feature data and the first feature data is less than a preset threshold, for the client to connect to the target cockpit unit through the target wireless network.

2. The cockpit unit control method of claim 1, wherein generating a target wireless network comprises:
extracting biometric feature data from the first image data to obtain the first feature data;
generating the network connection data according to the first feature data, wherein the network connection data comprises a network user name and a network password; and
generating the target wireless network according to the network user name and the network password.

3. The cockpit unit control method of claim 2, wherein the network user name comprises the first feature data, and the network password is the first feature data.

4. The cockpit unit control method of claim 2, wherein the first feature data comprises a plurality of first data feature values generated according to a preset condition, the second feature data comprises a plurality of second data feature values generated according to the preset condition, and sending a network access response to the client in response to determining that a degree of feature association between the second feature data and the first feature data is less than an association threshold comprises:
respectively comparing the plurality of first data feature values with the corresponding second data feature values according to the preset condition, to obtain the degree of feature association between the second feature data and the first feature data; and
sending the network access response to the client in response to the degree of feature association being less than the association threshold.

5. The cockpit unit control method of any one of claims 1 to 4, wherein determining a target cockpit unit corresponding to the first image data comprises:
obtaining position information data according to the first image data; and
determining the target cockpit unit from a plurality of cockpit units according to the position information data;
or
acquiring a sensing parameter of a sensor that generates the first image data;
obtaining position information data according to the sensing parameter; and
determining the target cockpit unit from a plurality of cockpit units according to the position information data.

6. The cockpit unit control method of any one of claims 1 to 4, further comprising:
acquiring second image data; and
changing the first image data to the second image data and disabling the target wireless network, in response to the second image data being inconsistent with the first image data.

7. A cockpit unit control method, applied to a client, the method comprising:
reading a network user name of at least one wireless network;
extracting first feature data of the network user name;
determining the wireless network having a degree of feature association less than an association threshold as a target wireless network, wherein the degree of feature association is a degree of association between the first feature data and second feature data which is preset;
generating a network access request according to the second feature data and the first feature data; and
sending the network access request to a target cockpit unit corresponding to the target wireless network to control the target cockpit unit through the target wireless network.

8. The cockpit unit control method of claim 7, wherein the first feature data comprises a plurality of first data feature values generated according to a preset condition, the second feature data comprises a plurality of second data feature values generated according to the preset condition, and determining the wireless network corresponding to the network user name having a degree of feature association less than an association threshold as a target wireless network comprises:
respectively comparing the plurality of first data feature values with the corresponding second data feature values according to the preset condition, to obtain the degree of feature association between the second feature data and the first feature data; and
determining the wireless network corresponding to the network user name as the target wireless network in response to the degree of feature association being less than the association threshold.

9. A cockpit unit control system, comprising a memory, a processor, and a computer program stored in the memory and executable by the processor, wherein the computer program, when executed by the processor, causes the processor to perform the cockpit unit control method of any one of claims 1 to 8.

10. A computer-readable storage medium, storing computer-executable instructions which, when executed by a processor, cause the processor to perform the cockpit unit control method of any one of claims 1 to 8.
